# EUROPÄISCHE PATENTSCHRIFT

(11) **EP 3 160 834 B1**
(45) Veröffentlichungstag und Bekanntmachung des Hinweises auf die Patenterteilung: **06.05.2020**
(21) Anmeldenummer: 15734095.1
(22) Anmeldetag: 24.06.2015
(51) Int. Cl.: B62M 6/40, B62M 25/00, B62J 99/00

(54) **VORRICHTUNG ZUR PRÜFUNG VON ELEKTROFAHRRÄDERN**
APPARATUS FOR TESTING ELECTRIC BICYCLES
DISPOSITIF SERVANT À TESTER DES VÉLOS ÉLECTRIQUES

(30) Priorität: 24.06.2014 DE 102014108806
(43) Veröffentlichungstag der Anmeldung: 03.05.2017
(73) Patentinhaber: Groos, Nicola, 80469 München (DE)
(72) Erfinder: GROOS, Daniel, 80469 München (DE); SCHMUCKER, Hans, 81929 München (DE)
(74) Vertreter: Kudlek, Franz Thomas
(86) Internationale Anmeldenummer: PCT/EP2015/064307
(87) Internationale Veröffentlichungsnummer: WO 2015/197726

(56) Entgegenhaltungen:
- CN-Y- 2 738 231
- CN-Y- 2 798 074
- JP-A- 2000 074 792
- JP-A- 2000 356 573
- TW-A- 201 111 761

## Beschreibung

Die vorliegende Erfindung betrifft eine Vorrichtung zur Prüfung von Elektrofahrrädern. Derartige Vorrichtungen werden auch als Prüfstände bezeichnet.

Als Elektrofahrräder werden Fahrräder mit zusätzlichem Elektromotor bezeichnet. Der Motor ist im Vorder- oder Hinterrad als Nabenmotor oder im Tretlager als sogenannter Mittelmotor angebracht. Die benötigte Energie wird in der Regel von einer Traktionsbatterie oder einem Akkupack geliefert, welcher beispielsweise aus zusammengefassten Akkumulatorzellen besteht.

Unter dem Begriff Elektrofahrrad im Sinne der vorliegenden Erfindung werden somit Fahrräder verstanden, bei dem der Fahrer weiterhin pedalieren kann, wobei der Elektromotor das Pedalieren unterstützt. Derartige Elektrofahrräder sind auch unter den Bezeichnungen E-Bikes, Pedelec, SI-Bikes und Lasten-E-Bike bekannt. Ein weiterer zusammenfassender Begriff ist Light-Electric-Vehicles. Im Folgenden wird jedoch der Begriff Elektrofahrrad verwendet.

Elektrofahrräder weisen gegenüber herkömmlichen, rein mechanischen Fahrrädern zahlreiche elektrische Komponenten auf, womit beispielsweise die Endprüfung nach Montage, aber auch die Wartung oder Reparatur komplexer ist als bei herkömmlichen Fahrrädern.

Zur Überprüfung von Elektrofahrrädern, z. B. im Falle eines Defekts, ist es bisher üblich, eine Testfahrt durchzuführen. Dieses Verfahren erweist sich in der Praxis als sehr zeit- und kostenaufwendig.

Es besteht daher ein Bedarf für eine einfache und effektive Überprüfung der elektrischen Komponenten eines Elektrofahrrads, und insbesondere deren Wechselwirkung mit dem mechanischen Antrieb, der durch den Benutzer mittels Pedalierens betätigt wird.

Bisher bekannte Prüfstände zur Überprüfung von Elektrofahrrädern bauen sehr groß, dass sie beispielsweise nicht geeignet sind, in typischerweise relativ kleinen Fahrradwerkstätten eingesetzt zu werden. Außerdem sind bekannte Prüfstände nicht in der Lage, sämtliche Typen von Elektrofahrrädern (unabhängig von Hersteller und Ausgestaltung) zu prüfen. Ein Fixieren eines Elektrofahrrades auf bekannten Prüfständen benötigt ferner viel Zeit.

Aus der JP 074792 A ist eine gattungsgemäße Vorrichtung zur Prüfung von Elektrofahrrädern bekannt. Dokument JP 2000 074792 A offenbart den Oberbegriff des Anspruchs 1. Vorrichtungen zur Überprüfung von Elektrofahrrädern sind ferner beispielsweise aus der CN 2 798 074 Y sowie der TW 201111 761 A1 bekannt. Eine weitere derartige Vorrichtung ist in der JP 2000356573 A beschrieben.

Die vorliegende Erfindung strebt daher die Bereitstellung eines klein bauenden und einfach sowie flexibel zu handhabenden Prüfstandes für Elektrofahrräder an. Die erfindungsgemäße Vorrichtung, wie sie in Anspruch 1 definiert ist, zeichnet sich insbesondere dadurch aus, dass sie in der Lage ist, die Pedalkurbel ungleichmäßig anzutreiben und so menschliches Pedalieren zu simulieren, so dass die Steuerung des Elektrofahrrads und/oder der Vorrichtung im Wesentlichen keinen Unterschied zwischen einem echten menschlichen Pedalieren und einem (simu lierten) Pedalieren mittels der erfindungsgemäßen Vorrichtung feststellen kann. Dies ermöglicht die Prüfung z. B. der Steuerung zahlreicher Arten von Elektrofahrrädern, welche zum Beispiel lediglich dann ein Pedalieren eines Fahrers elektrisch unterstützen, wenn eine ungleichmäßige Drehbewegung der Pedalkurbel, also entsprechend einem ungleichmäßigen Pedalieren (also mit wechselnden bzw. nicht konstanten Winkelgeschwindigkeiten bzw. Kraftverläufen), erfasst wird. Besonders vorteilhaft ist hierbei die Simulation eines menschlichen Pedalierens, bei der insbesondere in der Zwölfuhr- bzw. Sechsuhrstellung der Pedalkurbel eine geringere Kraft bzw. ein geringeres Drehmoment als bei den absteigenden bzw. aufsteigenden Flanken (insbesondere Dreiuhr- bzw. Neunuhrstellung) bereitgestellt wird. Die erfindungsgemäße Vorrichtung ist auch in der Lage, die Pedalkurbel gleichmäßig, also mit konstanter Winkelgeschwindigkeit anzutreiben. Die Verwendung des Wortes "bzw." in Patentanspruch 1 soll als Synonym für die Formulierung "und/oder" verstanden werden.

Erfindungsgemäß weist die erfindungsgemäße Vorrichtung eine Betätigungseinrichtung zur Betätigung einer Gangschaltung eines zu prüfenden Elektrofahrrads auf. Mit dieser Maßnahme kann die Simulation eines tatsächlichen Betriebes eines Elektrofahrrads durch eine Person noch genauer simuliert werden.
Ein manuelles Bedienen der Gangschaltung des Elektofahrrads durch den Operator des Prüfstandes kann somit entfallen, wodurch sich die Testdurchlaufzeiten und Fehlbedienungen verringern lassen.

Der Mitnehmer ist vorteilhafterweise zur Bereitstellung einer über eine vollständige Umdrehung der Pedalkurbel wenigstens teilweise dem menschlichen Pedalieren nachempfundenen bzw. angenäherten veränderlichen Kraft ausgebildet. Mittels einer derartigen Kraft kann ein entsprechendes, dem menschlichen Pedalieren nachempfundenes, bzw. angenähertes Drehmoment, welches die Pedaliertätigkeit eines Benutzers approximiert, bereitgestellt werden. Es ist in diesem Zusammen hang auch denkbar, auch Kraftverläufe bereitzustellen, wie sie beispielsweise unter realen Bedingungen in Messreihen mit Personen aufgenommen werden. Besonders bevorzugt ist der Mitnehmer zur Bereitstellung einer über eine vollständige Umdrehung der Pedalkurve wenigstens teilweise sinusförmig veränderlichen Kraft ausgebildet. Der Begriff "sinusförmig veränderlich" umfasst insbesondere exakte und angenäherte Sinusformen sowie auch von einer exakten Sinuskurve abweichende sinusartige Verläufe, wie sie etwa im Rahmen von Messreihen mit Personen aufgenommen werden.

Zweckmäßigerweise greift der Mitnehmer der erfindungsgemäßen Vorrichtung direkt an der Pedalkurbel des zu prüfenden Elektrofahrrads an. Hiermit ist eine besonders einfache und schnelle Bedienbarkeit der erfindungsgemäßen Vorrichtung zur Verfügung gestellt. Beispielsweise muss im Gegensatz zu einem herkömmlichen Angreifen direkt an der Tretlagerwelle nicht zunächst die Tretkurbel von der Tretlagerwelle demontiert werden, um die Tretlagerwelle greifen zu können. Auch sind keine entsprechenden Adapter zur Anpassung an unterschiedlich geformte Tretlagerwellen nötig. Da schließlich auch keine erneute Montage der Pedalkurbel nach Beendigung der Prüfung des Elektrofahrrads notwendig ist, kann der Durchsatz der zu prüfenden Elektrofahrräder gegenüber herkömmlichen Lösungen signifikant gesteigert werden. Auch gegenüber einer Befestigung des Mitnehmers bzw. des Mitnehmerelements an den Pedalen ist die erfindungsgemäße Lösung wesentlich schneller und unkomplizierter, da bei einer derartigen Lösung Pedale in aufwändiger Weise zwischen zwei Platten eines Mitnehmers eingeschraubt werden müssen.

Es ist jedoch auch denkbar, dass der Mitnehmer an dem mit der Pedalkurbel verbundenen Kettenblatt (oder einer anstelle eines Kettenblattes vorgesehenen Zahnradscheibe) angreift. An dieser Stelle sei angemerkt, dass Elektrofahrräder in der Regel einen Kettenantrieb (mit entsprechenden Kettenblättern) oder einen Zahnriemenantrieb (mit entsprechenden Zahnradscheiben) aufweisen. Die vorliegende Erfindung eignet sich für beide Arten von Antrieben, wobei im Folgenden der Einfachheit halber in der Regel lediglich von Kettenantrieben die Rede ist.

Bevorzugt weist die Vorrichtung eine Fixiereinrichtung zur räumlichen Fixierung des zu prüfenden Elektrofahrrades auf, wobei die Fixiereinrichtung eine Spannvorrichtung zum Einspannen der wenigstens eines Rahmenteils des Elektrofahrrads aufweist.

Zur Fixierung des Elektrofahrrads weist die erfindungsgemäße Vorrichtung vorteilhafterweise einen Schnappmechanismus auf, welcher an der Sattelstütze des Elektrofahrrades angreift. Bei Demontage des Sattels und der Sattelstütze kann die Sattelstütze durch einen Dorn ersetzt werden. In diesem Falle kann die Wahrscheinlichkeit einer Beschädigung des Elektrofahrrads, insbesondere der Sattelstütze oder des Sattels, minimiert werden.

Gemäß einer besonders bevorzugten Ausführungsform der erfindungsgemäßen Vorrichtung, weist der Mitnehmer, mittels dessen die Pedalkurbel oder ein Ket tenblatt des zu prüfenden Elektrofahrrads mitgenommen wird, eine Mitnehmerscheibe und wenigstens ein Mitnehmerelement zum Mitnehmen der Pedalkurbel auf. Vorteilhafterweise ist der Mitnehmer derart aufgehängt, dass er im Raum dreidimensional beweglich ist. Mittels eines derartigen dreidimensional beweglichen Mitnehmers ist ein besonders einfaches Heranführen an ein Elektrofahrrad und ein Ein- und Ausspannen eines Kurbelantriebs bzw. einer Pedalkurbel des Elektrofahrrads möglich.

Der Mitnehmer ist insbesondere derart ausgebildet, dass er die Pedalkurbel nur einseitig, insbesondere an einer Halbkurbel der Pedalkurbel antreibt bzw. angreift. Hierdurch kann die erfindungsgemäße Vorrichtung in besonders einfacher Weise von einer Seite an das zu prüfende Elektrofahrrad herangefahren werden.

Zweckmäßigerweise weist der Mitnehmer wenigstens ein gegenüber der Mitnehmerscheibe verschiebbares Mitnehmerelement zum Erfassen der Pedalkurbel auf. Mittels derartiger Mitnehmerelemente ist ein sehr schnelles Ein- und Ausspannen eines Elektrofahrrads in der erfindungsgemäßen Vorrichtung möglich. Ist die Mitnehmerscheibe beispielsweise mit nur einem Mitnehmerelement ausgebildet, kann hiermit eine Vorwärtsfahrt des Elektrofahrrads simuliert werden. Sind zwei Mitnehmerelemente vorgesehen, welche die Pedalkurbel von zwei Seiten erfassen, kann ohne weitere Einstellungsmaßnahmen eine Vorwärtsfahrt oder ein Rücktritt z.B. beim Betätigen einer Rücktrittsbremse des Fahrrads simuliert werden.

Zweckmäßigerweise weist die erfindungsgemäße Vorrichtung wenigstens eine Antriebs- und/oder Bremsvorrichtung auf, mittels der ein Rad des Elektrofahrrads direkt antreibbar oder abbremsbar ist. Mit dieser Maßnahme ist beispielsweise eine Bergabfahrt oder eine Bergauffahrt simulierbar.

Die erfindungsgemäße Vorrichtung weist eine Mess- und Steuereinheit zur Steuerung des Mitnehmers bzw. des Mitnehmerantriebs und zur Messung sowie Auswertung hierbei erfasster Daten auf.

Bevorzugt ist die erfindungsgemäße Vorrichtung mobil, insbesondere mittels Rollen verfahrbar, ausgebildet.

Ferner kann die Vorrichtung auch mittels entsprechend ausgebildeter Gelenkelemente zusammenklappbar ausgebildet sein.

Hierdurch kann die erfindungsgemäße Vorrichtung in einfacher Weise auch zum Beispiel in kleineren Werkstätten gelagert werden, und nur bei Bedarf aufgeklappt und eingesetzt werden.

Die erfindungsgemäße Vorrichtung ist in besonders vorteilhafter Weise modular aufgebaut. Hierdurch lassen sich einzelne Komponenten ersetzen, austauschen, oder auch nachträglich ergänzen, so dass die Vorrichtung zukunftssicher an sich ggf. ändernde Anforderungen angepasst werden kann.

Vorteilhafterweise ist wenigstens eine Antriebs- und/oder Bremseinheit für das Hinterrad bzw. Vorderrad des Elektrofahrrads vorgesehen. Hiermit können zum Beispiel Bremsen oder in den Rädern befindliche Sensoren geprüft werden. Eine derartige Ausgestaltung ist insbesondere auch denkbar für Elektrofahrräder mit zwei angetriebenen Rädern, also angetriebenen Vorderrad und Hinterrad.

Für den Fall, dass ein aktives Bremsen durch die erfindungsgemäße Vorrichtung nicht simuliert werden muss, kann eine derartige Bremskonstruktion entfallen. Optional vorgesehen sind beispielsweise automatische Aktoren zur Betätigung der Bremsen des Elektrofahrrads, insbesondere Handbremse und/oder Rücktrittsbremse.

Zweckmäßigerweise sind die Antriebs- und/oder Bremseinheiten für Vorderrad und Hinterrad gegeneinander verschiebbar. Hierdurch können Elektrofahrräder mit unterschiedlichen Rahmenweiten bzw. Abständen zwischen Vorderrad und Hinterrad, bis hin zu sehr lang konstruierten Lasten-Elektrofahrrädern in die er findungsgemäße Vorrichtung unter gleichzeitiger Prüfung von Vorderrad und Hinterrad eingespannt werden. Soll lediglich das Hinterrad angetrieben oder gebremst werden, ist auch eine einzige Antriebs- und/oder Bremseinheit ausreichend.

Zweckmäßigerweise ist die Betätigungseinrichtung zur Betätigung einer Gangschaltung als direkt an einem Zug einer Gangschaltung angreifender Schaltaktor ausgebildet. Dies erlaubt eine sehr einfache Handhabung, da z. B. kein Zug einer Gangschaltung eines zu prüfenden Elektrofahrrads ausgefädelt werden muss. Der Schaltaktor wird zweckmäßigerweise mit einer Seite an einem Rahmenbauteil, vorzugsweise an einer Zugführungsöse, befestigt oder abgestützt, und mit der anderen Seite um die Zugaußenhülle geklemmt. Hierbei ist er in der Lage, die Zugaußenhülle gegen die Befestigung am Rahmen zu verschieben, und so eine Schaltung zu simulieren, ohne dass der Zug abgebaut werden muss, und am Ende einer Prüfung wieder eingebaut und neu eingestellt werden müsste Figurenbeschreibung

Eine bevorzugte Ausführungsform der Erfindung wird nun anhand der beigefügten Zeichnung weiter beschrieben. In dieser zeigt
Figur 1 eine seitliche schematische Ansicht einer bevorzugten Ausführungsform einer erfindungsgemäßen Vorrichtung, wobei ein zu prüfendes Elektrofahrrad in die Vorrichtung eingespannt ist,
Figur 2 eine seitliche Ansicht eines im Rahmen der Erfindung einsetzbaren Mitnehmers,
Figur 3 eine Draufsicht auf den Mitnehmer gemäß Figur 2 in Richtung des Pfeiles A in zwei unterschiedlichen Positionen der vorgesehenen Mitnehmerelemente, und
Figur 4 zwei schematisch vereinfachte Kurven mit entsprechenden Stellungen der Pedalkurbel zur weiteren Erläuterung der Erfindung.

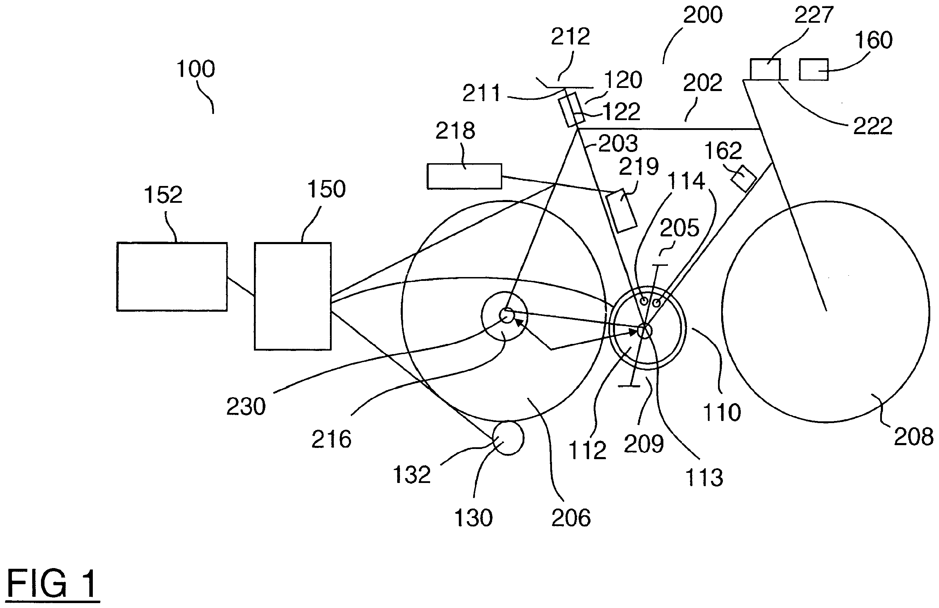

Eine bevorzugte Ausführungsform einer erfindungsgemäßen Vorrichtung (Prüfstand) ist in Figur 1 insgesamt mit 100 bezeichnet.

Die Vorrichtung ist zusammen mit einem zu prüfenden Elektrofahrrad 200, welche in die Vorrichtung eingespannt ist, dargestellt. Das Elektrofahrrad weist einen Rahmen 202, Räder 206, 208, einen Kraft- bzw. Pedalierübertragungsmechanismus 209, eine Sattelstütze 211, einen Sattel 212, einen Elektromotor 216, eine Batterie 218, eine Steuereinheit 219, und eine Bedieneinheit 227 zur Bedienung des Steuergeräts 219 auf.

Die Vorrichtung 100 weist eine Mess- und Steuerelektronik 150, eine Anzeige- und Eingabeeinheit 152, sowie eine Einspannvorrichtung 120 auf. Die Vorrichtung 100 weist ferner eine Antriebs- und/oder Bremseinheit 130 auf, welche mit nicht dargestellten Geschwindigkeitssensoren ausgebildet ist. Die Einheit 130 weist eine mittels eines (nicht dargestellten) Antriebs drehbare Rolle 132 auf, auf der ein Rad des Elektrofahrrads 200, im dargestellten Beispiel Hinterrad 206, positionierbar, und durch entsprechende Reibungswirkung antreibbar ist. Es sei darauf hingewiesen, dass eine derartige Antriebs- und/oder Bremseinheit 130 alternativ oder zusätzlich auch für ein zweites Rad, im dargestellten Beispiel also für das Vorderrad 208 des Elektrofahrrads, bereitgestellt werden kann.

Die Vorrichtung 100 weist ferner einen Mitnehmer 110 auf, der dazu ausgebildet ist, eine Pedalkurbel 205 des Elektrofahrrads zu greifen und zur Bereitstellung einer Drehbewegung der Pedalkurbel 205 bzw. eines von der Pedalkurbel angetriebenen (nicht dargestellten) vorderen Kettenblatts zu wirken.

Das Kettenblatt ist in üblicher Weise über eine ebenfalls nicht dargestellten Kette mit einem hinteren Kettenblatt (ebenfalls nicht dargestellt) verbunden. Die beiden Kettenräder und die Kette bilden zusammen mit der Pedalkurbel 205 und einem (nicht dargestellten) Tretlager den durch Pedalieren des Benutzers zu betätigenden Kraftübertragungsmechanismus 209 des Elektrofahrrads 200.

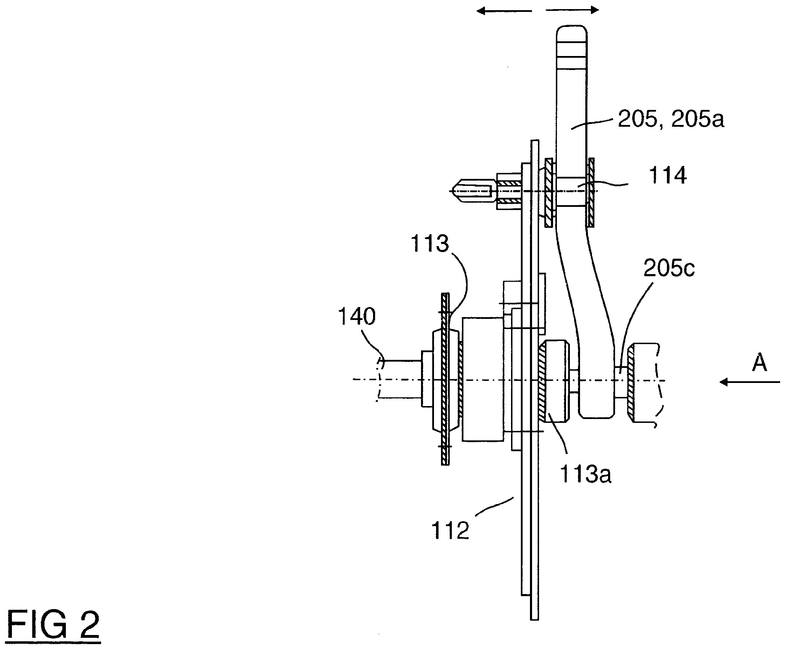

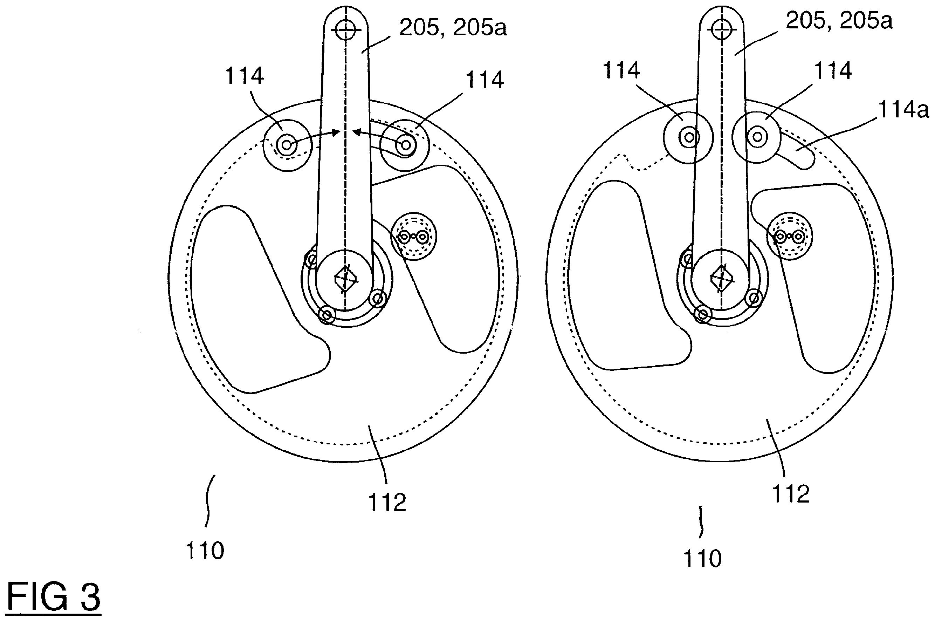

Der Mitnehmer 110 weist eine Mitnehmerscheibe 112 und zwei Mitnehmerelemente 114 zum Greifen der Pedalkurbel 205 auf, wie im Folgenden unter Bezugnahme auf die Figuren 2 und 3 im Einzelnen beschrieben wird. Ein Antrieb für den Mitnehmer 110 ist in Figur 1 schematisch dargestellt und mit 113 bezeichnet.

Zur Fixierung des zu prüfenden Fahrrades 200 im Raum weist die erfindungsgemäße Vorrichtung die erwähnte Einspannvorrichtung 120 auf. Diese Einspannvorrichtung 120 greift vorzugsweise an der Sattelstütze 211 des Elektrofahrrads an.

Der Elektromotor 216 kann als Vorderrad-, Hinterrad, oder Mittelmotor ausgeführt sein. In der Figur 1 ist beispielhaft ein Hinterradmotor 216 dargestellt.

Der Hinterradmotor 216 bezieht seine elektrische Energie aus der Batterie 218, welche beispielsweise unter einem (nicht dargestellten) Gepäckträger des Elektrofahrrads 200 vorgesehen sein kann.

Die Zufuhr von elektrischer Energie der Batterie 218 zu dem Motor 216 wird mittels der Steuereinheit 219 gesteuert. Diese Steuerung erfolgt insbesondere in Abhängigkeit von einer erfassten Pedalierleistung eines Benutzers des Fahrrads, bzw. einer durch den Mitnehmer 110 bereitgestellten Antriebsleistung. Insbesondere kann vorgesehen sein, dass die Steuereinheit 219 eine Beaufschlagung des Motors 216 mit elektrischer Energie aus der Batterie 218 nur dann zulässt, wenn eine minimale oder vorwählbare Pedalier- bzw. Antriebsleistung festgestellt wird. Die Steuereinheit kann beispielsweise, wie in der Figur 1 dargestellt, an dem Rahmen 202, z. B. einem Sitzrohr 203, angebracht sein. Es sei angemerkt, dass die Steuereinheit 219 auch in einem Batteriegehäuse, einem Motorgehäuse oder in einem Gehäuse des Bedienelements 227, welches vorzugsweise an einer Lenkstange 222 vorgesehen ist, ausgebildet sein kann. Mittels eines derartigen Bedienelements 227 sind z. B. verschiedene Leistungs- bzw. Zuschaltstufen für den Elektromotor 216 zusätzlich zur Pedalierleistung einstellbar.

Das Elektrofahrrad ist ferner mit verschiedenen (rein schematisch dargestellten) Sensoren 230 ausgebildet, mit der beispielsweise Geschwindigkeiten, Drehmomente oder Kräfte erfasst werden können. Die von derartigen Sensoren erfassten Werte werden der Steuereinheit 219 zur Verfügung gestellt.

In den Figuren 2 und 3 ist der Mitnehmer 110 im Einzelnen dargestellt. Man erkennt die Mitnehmerscheibe 112 und die Mitnehmerelemente 114. Der Mitnehmerantrieb 113 ist in unmittelbaren Kontakt mit der Mitnehmerscheibe 112 vorgesehen. Der Mitnehmer 110 ist an einer Halterung 140 befestigt, welche mehrere (nicht dargestellte) Gelenkstangen und Gelenke aufweist, so dass sie frei im Raum, das heißt dreidimensional, positionierbar ist. Dies ermöglicht eine einfache und unaufwändige Positionierung der Mitnehmerscheibe 112 bzw. der Mitnehmerelemente 114 an einer Kurbel des Kurbelantriebs bzw. der Pedalkurbel 205. In Figur 2 und 3 ist jeweils nur eine Halbkurbel 205a der Pedalkurbel 205 dargestellt.

Die Mitnehmerelemente 114 können insbesondere als Dornelemente oder Pilzelemente ausgebildet sein. Derartige Elemente sorgen für eine problemlose Kraftübertragung von der Vorrichtung (Prüfstand) auf die Pedalkurbel des Elektrofahrzeugs.

Insbesondere kann somit der Mitnehmer 110 in einfacher Weise seitlich an ein bereits mittels der Einspannvorrichtung 120 fixiertes Elektrofahrrad 200 herangefahren werden.

Der Mitnehmer weist ferner eine Zentriervorrichtung 113a auf, welche eine einfache Weise eine Zentrierung zum Beispiel von einem Tretlager 205c des Kurbelantriebs ermöglicht.

Insbesondere unter Bezugnahme auf Figur 3 sind zwei Mitnehmerelemente 14 vorgesehen, welche zunächst, bei der Positionierung der Mitnehmerscheibe 110 an der Pedalkurbel 205, in einer maximal voneinander beabstandeten Stelle positioniert sind (Figur 3, links).

Nach Positionierung der Kurbelscheibe 112 an der Kurbel, wie z. B. in Figur 2 dargestellt ist, werden die beiden Mitnehmerelemente 114 aufeinander zubewegt, so dass sie die Kurbel 205 bzw. Halbkurbel 205a fest greifen (Figur 3, rechts). Es ist beispielsweise denkbar, lediglich eines der Mitnehmerelemente 114 derart beweglich, beispielsweise in einem Langloch 114a verschiebbar, auszubilden.

Die Bewegung des wenigstens einen Mitnehmerelements 114 kann manuell, aber auch automatisch durch entsprechende Eingabe über die Eingabeeinheit 152 oder eine entsprechende Sensorik erfolgen. Eines der Mitnehmerelemente 114 dient zweckmäßigerweise zur Kraftübertragung in Fahrtrichtung. Die zweite Mitnehmereinrichtung ist dann beispielsweise in der Lage, die Tretkurbel in Rücktrittsrichtung zu fixieren. Die Fixierung kann insbesondere über ein Feststellen des beweglichen Mitnehmerelements oder über eine Feder, welche das bewegliche Mitnehmerelement an die Pedalkurbel 205 heranzieht, erfolgen. Die Stärke einer derart eingesetzten Feder bestimmt dann die Kraft, die in Rückwärtsrichtung von der Kurbelscheibe 112 auf das Elektrofahrrad übertragen werden kann. Selbstverständlich können die Positionen der fixierten und verschiebbaren Mitnehmerelemente vertauscht werden. Vorteilhaft ist es, die Position (zum Öffnen oder Schließen) der Mitnehmerelemente zueinander über einen Seilzug oder ein Gestänge zu realisieren, wodurch eine Fernbetätigung in einfacher Weise möglich ist.

Insgesamt ist die Kopplung der erfindungsgemäßen Vorrichtung an das zu prüfende Elektrofahrrad sehr schnell und gleichzeitig präzise realisierbar. Wie erwähnt, ist der als Pedalkurbelantrieb dienende Mitnehmer 110 über Gelenke dreidimensional verschiebbar und sehr genau positionierbar. Vorteilhafterweise wird hierbei das Eigengewicht des Mitnehmers kompensiert, wobei hier vorzugsweise Gasdruckfedern oder gleichwertige Konstruktionen verwendet werden, so dass auch eine im Wesentlichen kraftlose Positionierung möglich ist.

Da sich die Pedale des Elektrofahrrads bodennah befinden, muss die Positionierung des Mitnehmers ebenfalls in Bodennähe erfolgen. Herkömmlicherweise war dies für einen Bediener nur in gebückter Haltung realisierbar. Vorteilhaft ist daher, die Positionierung des Mitnehmers 110 durch ein entsprechendes Gestänge bei stehender Position des Bedieners durchzuführen. Hierdurch ist es auch in einfacherweise möglich, die Positionierung des Mitnehmers bezüglich der Pedalkurbelgenau zu überwachen, da der Bediener jederzeit die Schnittstelle zwischen erfindungsgemäßer Vorrichtung und Elektrofahrrad gut im Blick hat.

In besonders vorteilhafter Ausgestaltung kann das Gestänge zur Positionierung des Mitnehmers mit einer Unter- und/oder Übersetzung ausgebildet sein. Da die Positionierung im Millimeterbereich genau erfolgen muss, ist es vorteilhaft, eine Übersetzung derart in das Gestänge zur Positionierung des Mitnehmers zu integrieren, dass große Wege am Gestänge nur zu kleinen Bewegungen am Mitnehmer führen. Die Übersetzung kann ein- und ausschaltbar ausgebildet sein, damit zum Beispiel eine grobe Positionierung schnell erfolgen kann, und die Feinjustierung dann übersetzungsunterstützt erfolgt.

Durch das Einspannen der Pedalkurbel 205 zwischen den beiden Mitnehmerelementen 114 kann in einfacher und zuverlässiger Weise eine durch den Antrieb 113 veranlasste Drehung der Mitnehmerscheibe 112 auf die Kurbel 205 übertragen werden.

Die erfindungsgemäße Vorrichtung kann auch mit automatischen Aktoren zur Betätigung der Bremsen, beispielsweise einer Handbremse oder einer Rücktrittsbremse, des Elektrofahrrads ausgebildet sein. Derartige Aktoren sind nur schematisch dargestellt und mit 160 bezeichnet. Sie sind beispielsweise an einer Handbremse anbringbar. Es ist jedoch auch möglich, derartige Aktoren an einem (nicht dargestellten) Zug einer Handbremse vorzusehen.

Es ist ferner möglich, die erfindungsgemäße Vorrichtung mit Aktoren 162 zur Betätigung einer Gangschaltung auszubilden. Diese greifen bevorzugt an einem am Rahmen entlanggeführten Zug der Gangschaltung an. Ein Ausfädeln eines Zuges kann somit vermieden werden, wodurch die Prüfung eines Elektrofahrrads auch unter Berücksichtigung verschiedener einstellbarer Gänge sehr schnell und mit wenig Montageaufwand durchgeführt werden kann.

Besonders bevorzugt ist, das Hinterrad des Elektrofahrrads 206 über eine ebenerdige Schiene an die korrekte Position der Rolle 132 zu führen, so dass das Elektrofahrrad in einfacher Weise bezüglich der Einspannvorrichtung 120 positioniert werden kann.

Zweckmäßigerweise verfügt die erfindungsgemäße Vorrichtung 100 über spezielle Sicherheitsfunktionen. Neben einem mechanischen Not-Ausschalter sind durch eine kontinuierliche Messwertüberwachung auch viele Plausibilitätsprüfungen integrierbar, welche den sicheren und zuverlässigen Betrieb der Vorrichtung gewährleisten, und diesen bei Bedarf entweder automatisch abschalten oder in einen sicheren Betriebszustand versetzen. Als Beispiel für eine derartige Plausibilitätsprüfung sei die Überwachung der Leistung des Elektrofahrrads 200 genannt. Wenn die Vorrichtung den Mitnehmer antreibt, und hierbei festgestellt wird, dass sich das Hinterrad 206 des Elektrofahrrads 200 nicht dreht, ist entweder kein Elektrofahrrad in die Vorrichtung eingespannt, oder die Kette des Elektrofahrrads ist gerissen. In einem derartigen Fall schaltet die Vorrichtung automatisch ab und gibt eine entsprechende Fehlermeldung an den Benutzer aus. Verklemmt sich die Kette des Elektrofahrrads beispielsweise, kann die Vorrichtung ebenfalls automatisch ausgeschaltet werden, da ein Überstrom am Antrieb gemessen wird.

Die erfindungsgemäße Vorrichtung kann mit verschiedenen Funktionalitäten zur Prüfung eines Elektrofahrrads ausgebildet sein. Im Folgenden sei beispielhaft auf die folgenden Funktionalitäten hingewiesen:
- Es kann die Leistungsabgabe der Batterie 218 des Elektrofahrzeugs überwacht werden. Hierzu wird beispielsweise ein Y-Messkabel zwischen die Batterie 218 und die Steuerung 219 gelegt. Dieses Y-Messkabel verzweigt sich und führt die Messleitung bzw. Messleitungen in die Messelektronik 150. Die Messelektronik 150 kann hierbei die Spannung V_{B} und den Strom I_{b}, welche durch die Batterie 218 bereitgestellt werden, messen, und hieraus die abgegebene Batterieleistung zu P_{B} = V_{B}.I_{B} errechnen.
- Die jeweiligen Messwerte für Spannung V_{B} und Strom I_{b} können ebenfalls ausgewertet und analysiert werden. So liefert die zeitliche Analyse der Spannung V_{b} bei bekannter Leistungsabgabe P_{b} eindeutige Werte zur Beurteilung des Zustandes der Batterie 218.
- Es kann die Leistungsabgabe des Mitnehmers (bzw. Kurbelwellenantriebs) 110 an die Pedalkurbel 205 des zu prüfenden Elektrofahrrads gemessen werden. Die Mess- und Steuerelektronik 150 regelt hierbei die Spannung Vₖ und den Strom Iₖ, und damit die Leistung des Kurbelwellenantriebs Pₖ=Vₖ. Iₖ. Zusätzlich kann der Wirkungsgrad des Kurbelwellenmotors und des Kraftübertragungssystems an das Elektrofahrrad bestimmt werden, um die tatsächlich auf das Elektrofahrrad übertragene Leistung zu bestimmen. Hierzu wird die vom Hinterrad abgegebene Leistung an die unter dem Hinterrad angebrachte Antriebs- und/oder Bremseinheit von der Messelektronik gemessen. Der Quotient aus Leistung am Hinterrad und Leistung des Kurbelwellenantriebs ergibt hierbei den Wirkungsgrad des Kraftübertragungssystems.

Die Steuerung des Antriebsstroms und der Antriebsspannung des Mitnehmers ermöglicht es, Drehzahlprofile vorzugeben. Es ist ebenfalls möglich, den Mitnehmer drehmoment gesteuert zu betreiben, das heißt unter Vorgabe von Drehmomentprofilen. Es sei angemerkt, dass im folgenden die Begriffe "Elektrofahrrad" und "LEV (Abkürzung für Light-Electric-Vehicle)" synonym verwendet werden. Gleichzeitig wird die erfindungsgemäße Vorrichtung 100 im folgenden in der Regel als Prüfstand bezeichnet.
- Die erfindungsgemäße Vorrichtung 100 kann mit einem regelbaren Hinterradantrieb ausgebildet sein. Hierbei wird zum Beispiel die Antriebsrolle 132, welche einen bekannten Durchmesser aufweist, von einem Motor mit regelbarer Spannung Vₐ und Iₐ und einem bekannten Wirkungsgrad angetrieben.
- Die Steuerung von Hinterradantriebsstrom und Hinterradantriebsspannung ermöglicht es dem Hinterradantrieb, drehzahlgesteuert (Vorgabe einer Drehzahl n_{A}) betrieben zu werden, das heißt erfindungsgemäß können Drehzahlprofile durch die Vorrichtung vorgegeben werden. Auch hier ist eine Drehmomentsteuerung möglich, also die Vorgabe von Drehmomentprofilen. Über den bekannten Durchmesser der Rolle 132 kann bei bekannter Drehzahl einfach die Geschwindigkeit v_{A} des Hinterrades des Elektrofahrrads berechnet werden.
- Durch den Hinterradantrieb kann unter anderem das Rollen des Elektrofahrrads ohne Betätigung des Kurbelantriebs bzw. des Mitnehmers simuliert werden. Dies ist unter anderem notwendig, um das Rekuperationsverhalten (also das Wiederaufladen der Batterie 218 bei Betätigung einer Wirbelstrombremse des Elektrofahrrads) prüfen zu können. Für die Messung der Leistungsabgabe des Elektrofahrrads an das Hinterrad ist wenigstens eines der folgenden Messsysteme in der erfindungsgemäßen Vorrichtung integriert:
   ∘ Wirbelstrombremse und/oder Hysteresebremse
   ∘ Ein als Generator betriebener Elektromotor kann ebenfalls zum Bremsen verwendet werden
   ∘ Die von einem Generator erzeugte Leistung P_{G} ist unter Einbeziehung des Generatorwirkungsgrades und des Wirkungsgrades des Übertragungssystems von Elektrofahrrad an den Generator identisch mit der vom Elektrofahrrad abgegebenen Leistung P_{L}.
   ∘ In einer besonders bevorzugten Ausführungsform kann der Generator gleichzeitig als Antriebsmotor für das Hinterrad eingesetzt werden.
   ∘ Auch das Vorsehen einer regelbaren Backenbremse ist möglich. Hierbei wird mindestens eine Bremsbacke gegen die von dem Fahrrad angetriebene Welle gefahren. Die aufgebrachte Bremskraft wird dabei über einen Kraftmesser und/oder einen Drehmomentsensor von der Messelektronik des Prüfstandes gemessen und geregelt. Hierbei ist besonders ein verschleißarmer Filzbacken vorteilhaft.
   ∘ Durch den Einsatz wenigstens eines der beschriebenen Bremssysteme kann zum Beispiel eine Bergauffahrt simuliert werden.
   ∘ Die Leistungsabgabe des Elektrofahrrads bei unterschiedlichen Belastungsprofilen wird mit diesen Vorkehrungen messbar.
      - In einer besonders bevorzugten Ausführung dient ein Drehmomentsensor an der Laufrolle der Antriebs- und/oder Bremseinheit als Drehmomentstütze sowohl für den Antriebsmotor als auch für die Bremse, dadurch ist es z.B. möglich, alle Kräfte am Hinterrad des Elektrofahrrades über einen einzigen Sensor zu bestimmen.
      - Durch die beschriebenen Mittel ist es mit dem Prüfstand möglich, realistische Fahrprofile für das Elektrofahrrad simulieren. Fahren, Beschleunigen, Rollen und Abbremsen können in der Ebene, bergauf und bergab dargestellt werden. Die relevanten Messgrößen werden kontinuierlich überwacht, aufgezeichnet und ausgewertet, sodass qualifizierte Prüfungen der elektrischen und elektronischen Komponenten des Elektrofahrrads in einfacher und schneller Weise möglich sind.
   ∘ Es ist möglich den Prüfstand so zu betreiben, dass das Elektrofahrrad auf eine vorgegebene Geschwindigkeit vₛ beschleunigt oder abgebremst wird.
   ∘ Es ist möglich den Prüfstand so zu betreiben, dass das Elektrofahrrad mit einer konstanten Geschwindigkeit fährt.
   ∘ Es ist möglich den Prüfstand so zu betreiben, dass das Elektrofahrrad mit einer konstanten Geschwindigkeit fährt auch wenn eine zusätzliche Bremskraft auf das Hinterrad wirkt.
   ∘ Es ist möglich den Prüfstand so zu betreiben, dass das Elektrofahrrad mit einem konstanten Antriebsmoment an der Kurbel angetrieben wird
   ∘ Es ist möglich den Prüfstand so zu betreiben, dass das Elektrofahrrad auf einen vorgegebenen Antriebsmoment beschleunigt oder angebremst wird
   ∘ Es ist möglich den Prüfstand so zu betreiben, dass mit dem Prüfstand die geforderten Normprüfungen der EN 15194 durchgeführt werden können
      - Durch den Messaufbau ist es auch möglich die Verlustleistung des Elektrofahrrad ohne Batterieunterstützung zu messen, indem die durch den Prüfstand eingebrachte Kurbelleistung mit der resultierenden Generatorleistung am Hinterrad verglichen wird.
      - Durch den Messaufbau kann auch die aufgenommene Ruheleistung des Elektrofahrrad bestimmt werden, indem die Batterieleistung ohne Kurbelantrieb gemessen wird.
      - Durch den Anschluss an das Bus-System des Elektrofahrrad kann der Prüfstand auch auf die Daten eines BMS (Battery Management Systems) des LEV Herstellers zugreifen und diese auswerten.
   ∘ Wird z.B. in den BMS Daten ein Fehler in der Funktion des Elektrofahrrad angezeigt, kann der Prüfstand genau diese Fahrsituation simulieren und so den Fehler wenn noch vorhanden reproduzieren.
   ∘ Durch den Anschluss an das BMS kann der Prüfstand die Softwareversion des Herstellers bestimmen und gegebenenfalls Updates durchführen
      - In einer bevorzugten Ausführungsform ist der Prüfstand mit Temperatursensoren ausgestattet, welche die Temperaturen des Elektrofahrrades und/ oder der Prüfstandkomponenten überwachen und auswerten.

In einer besonders bevorzugten Ausführungsform simuliert der Prüfstand den Kraftverlauf des menschlichen Tritts am Kurbelwellenantrieb, wie im Folgenden noch einmal ausgeführt wird:
In einer Reihe von Untersuchungen wurde die Trettechnik von verschiedenen Autoren betrachtet (HULL/DAVIS 1981; DAVIS/HULL 1981; LAFORTUNE/CAVANAGH 1983; SANDERSON/CAVANAGH 1988; ZSCHORLICH 1989; KAUTZ/FELTNER u.a. 1991; HENKE 1994). Die Untersuchungen kommen meist zu sehr ähnlichen Ergebnissen. Der typische Verlauf der vortriebswirksamen Kraft bzw. des erzeugten Drehmomentes über eine Kurbelumdrehung umfasst hierbei (für eine erste Halbkurbel also z. B. die Halbkurbel des rechten Pedals) von 0-180° einen in etwa glockenförmigen, und von 180° bis 360° im Wesentlichen konstanten Verlauf. Der Kraftverlauf an der zweiten Halbkurbel (also der Halbkurbel z. B. des linken Pedals) ist hierbei um 180° versetzt.

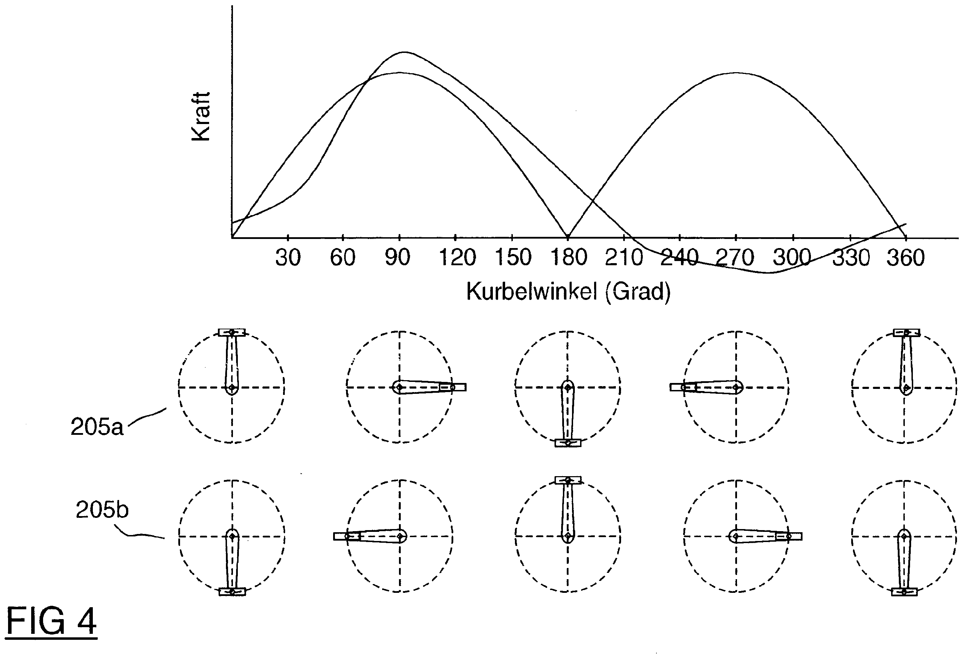

Dieser Zusammenhang ist in Figur 4 mittels Kurve 410 dargestellt. Kurve 410 stellt den Kraftverlauf an einer ersten Halbkurbel 205a (beispielsweise der rechten Halbkurbel) einer Pedalkurbel dar. Gleichzeitig sind entsprechende Stellungen der Halbkurbel 205a bei den Winkelstellungen 0°, 90°, 180°, 270° und 360° bzw. wieder 0° dargestellt.

Man erkennt, dass die Kurve 410 bei etwa 90° ihr Maximum aufweist, was einer maximalen durch den Benutzer eingebrachten Kraft bzw. einem entsprechendem maximalen Drehmoment entspricht. Zwischen etwa 180° und 360° ist die Kurve 410 in etwa konstant, wobei die die Halbkurbel 105a beaufschlagenden Kräfte sehr klein sind. Dies entspricht dem Teil der Umdrehung der gesamten Pedalkurbel 205, bei dem lediglich die zweite Halbkurbel 205b kraftbeaufschlagt wird.

Eine entsprechende Kurve für die zweite Halbkurbel 205b ist nicht dargestellt. Wie keiner weiteren Erläuterung bedarf, hätte diese ihr Maximum bei etwa 270° und würde von etwa 0° bis 90° bei sehr geringen Kräften relativ konstant sein.

Ein durch die Kurve 410 und durch die entsprechende Kurve für die zweite Halbkurbel insgesamt bereitgestellte Kurve kann durch eine Kurve 420 approximiert werden, welche eine Sinuskurve darstellt, deren Vorzeichen zwischen 180° und 360° umgekehrt ist.

Der erfindungsgemäße Mitnehmer kann derart ausgebildet sein, dass er einen kompletten 360°-Verlauf eines menschlichen Pedalierens simuliert. Er kann ebenfalls derart ausgebildet sein, dass er einen 360°-Kraftverlauf aus zwei hintereinander ausgeführten 180°-Phasen zusammensetzt. Letzteres ist insbesondere dann vorteilhaft, wenn der Mitnehmer 110 bzw. der Mitnehmerantrieb 113 an nur einer Halbkurbel 205a bzw. 205b das Elektrofahrrad antreibt. Eine Kraftbeaufschlagung an nur einer Halbkurbel kann insbesondere derart ausgeführt sein, dass zum Beispiel an der Halbkurbel 205a von etwa 0° bis 180° eine Kraft mit einer Komponente in Abwärtsrichtung (entsprechend einem menschlichen Pedalieren) und von etwa 180° bis 360° mit einer Komponente in Aufwärtsrichtung generiert wird. Diese Kraft mit Komponente in Aufwärtsrichtung entspricht in der Realität einer Betätigung der zweiten Halbkurbel 205b, mit entsprechender Kraftkomponente in Abwärtsrichtung.
- Der Prüfstand ist in der Lage den Kraftverlauf an der Pedalkurbel bzw. am Kurbelwellenantrieb über eine ganze und/ oder einen Abschnitt der Kurbelumdrehung beliebig zu modellieren.
- Der Prüfstand ist in der Lage die durchschnittliche Leistung des Kurbelwellenantriebs konstant zu halten und auch zu regeln.
- Besonders vorteilhaft ist dabei die Simulation des Kraftverlaufs, über die ganze oder einen Abschnitt der Kurbelwellenumdrehung, von typischen Verläufen eines Radfahrers.
- Besonders vorteilhaft ist auch eine Überlagerung des Kraftverlaufs über beide Pedale, bei der die beiden Kurven für die Pedale um 180° versetzt werden.
- Durch ein Umschalten der Drehrichtung des Kurbelwellenantriebs kann der Prüfstand einen Rücktritt simulieren (mit Freilauf und/ oder mit Rücktrittbremse)
- Durch das Anhalten des Kurbelwellenantriebs kann der Prüfstand den Freilauf beim Fahren simulieren.

In einer besonders bevorzugten Ausführungsform lässt sich der Prüfstand einfacher Weise kalibrieren.
- Mit einfachen Hilfsmitteln wie Federwaage, Hebel, Drehzahlmesser, Schiebleere werden die tatsächlichen Werte für Antriebsleistungen, Drehzahlen, Kräfte exakt ermittelt.
- Hierfür ist der Prüfstand mit speziellen konstruktiven Hilfsmitteln zum Einsatz der Messmittel ausgestattet (z.B. speziell geformte Löcher und/ oder Bolzen die mit dem entsprechenden Messmittel nach dem Schlüssel/ Schloss Prinzip korrespondieren)
- Die so berechneten Größen werden mit dem vom Prüfstand intern ermittelten Größen verglichen. Sollten bei diesem Soll-/ Ist-Abgleich Differenzen gemessen werden, so werden diese automatisch durch von der Prüfstand errechnete Parameter korrigiert.
- Bei der Kalibrierung können auch mehrere Werte für einen Prüfwert aufgenommen werden um die Kalibrierung mittels einer Kalibrierungsfunktion durchzuführen.

In einer besonders bevorzugten Ausführungsform lässt sich der Prüfstand besonders einfach bedienen
- Der Prüfstand kann über ein handelsübliches Touch-Pad bedient werden
- Der Prüfstand besitzt Schnittstellen zur drahtlosen Datenübertragung, insbesondere WLan und Bluetooth Schnittstellen
- Die Bedienungssoftware kann mit jedem Browser laufen
- Der Nutzer wird von einer Software Schritt für Schritt durch die Tests begleitet.
- Der Prüfstand verfügt über eine Datenbank mit E-Bikes aus der der Nutzer einfach das zu prüfende LEV heraussucht. Der Prüfstand kann dann mehrere zu diesem LEV passsende Test- und Prüfprogramme vorschlagen.
- Der Prüfstand verfügt über eine einfache Metasprache mit der der Nutzer eigene Test- und Prüfprofile in einfacher Weise zusammenstellen kann. Z.B.
   1. Beschleunige auf 15 km/h
   2. Fahre konstant mit 15 km/h während das Bremsmoment kontinuierlich von 0Nm auf 20Nm erhöht wird
   3. Betätige den Rücktritt
   4. Löse die Bremse des Hinterradantriebs
   5. Beschleunige bis auf 30km/h
   6. ...
- Die erstellten Prüfprofile können im Prüfstand abgespeichert und jederzeit aufgerufen, editiert und gelöscht werden.
- Der Prüfstand kann in ein Netzwerk eingebunden werden
   o In dem Netzwerk können Informationen zwischen mehreren gleichartigen Prüfstanden ausgetauscht werden.
      ▪ Z.B. können neue Prüfprofile auf allen Prüfstanden zur Verfügung gestellt werden
      ▪ Auch die Prüfergebnisse können so ausgetauscht werden. Dies ist z.B. sinnvoll wenn Auswertungen über Soll/ Ist Vergleiche erfolgen, da sich die Informationen über den SollWert mit jedem Test im Prüfstandnetzwerk weiter optimieren lassen.
      ▪ Informationen über neue LEVs werden so an alle Prüfstände verteilt, sodass die Prüfstände immer aktuelle Daten zur Verfügung haben
   o Der Prüfstand kann in Verbindung mit einem zentralen Server stehen
      ▪ Vom Server können Informationen über neue LEVs an alle Prüfstände verteilt werden
      ▪ Vom Server können neue Prüfprogramme an alle Prüfstände verteilt werden
   o Der Prüfstand ist über das Netzwerk ferndiagnosefähig
   o Der Prüfstand kann über das Netzwerk mit einer neuen Firmware upgedated werden

In einer besonders Bevorzugten Ausführungsform besitzt der Prüfstand eine Mess-und Steuerelektronik
- Die Prüfstandelektronik kann Messwerte sehr schnell aufzeichnen (z.B. 100 Messwerte pro Sekunde), speichern, ausgeben und graphisch darstellen.
- Die Messelektronik kann alle Grössen in gleichen Zeitabständen (zeitdiskret, Abtastrate z.B. 100 Hz) messen.
- Die Messwerte können mit einem Zeitstempel versehen und gespeichert werden.
- Die gespeicherten Messwerte können während des laufenden Tests für Steuer-, Regel- und Bewertungsaufgaben verwendet werden
- Die Messelektronik kann Modular aufgebaut sein. Steuerungen und Sensoren können auf mehrere Module verteilt sein.
- Die einzelnen Module der Messelektronik können z.B. über einen CAN-BUS miteinander kommunizieren.
- Die Module sind vorzugsweise mit nur einem Datenkabel (z.B. RJ45 Kabel) verbunden. Ein Adernpaar dient der Datenkommunikation (CAN), die anderen Adern werden zur Stromversorgung genutzt.
- Insbesondere ist mindestens ein Modul der Messelektronik so ausgelegt, dass es als Schnittstelle zur Akku- und/ oder Motorenelektronik genutzt werden kann.
   - über diese Schnittstelle kann die LEV Elektronik und der LEV Akku geprüft werden.
   - über diese Schnittstelle kann die Software des LEV geprüft und aktualisiert werden.
   - über diese Schnittstelle können die internen LEV Parameter und der LEV Sensorik geprüft und angepasst werden.
- Die Prüfstandelektronik kann über Soll/ Ist-Vergleiche bestimmen ob definierte Prüfungen bestanden wurden oder nicht
- Die Prüfstandelektronik kann den Kurbelwellenantrieb drehzahlgesteuert und/ oder drehmomentgesteuert betreiben
- Die Prüfstandelektronik kann den Hinterradantrieb geschwindigkeitsgesteuert betreiben

Durch eine einfache Klemmvorrichtung an der Einspannvorrichtung 120 kann das Elektrofahrrad an der erfindungsgemäßen Vorrichtung positioniert bzw. fixiert werden. Die Klemmvorrichtung greift dabei um die Sattelstütze des Elektrofahrrads. Besonders vorteilhaft ist hierbei die Verwendung von Kunststoffeinlagen für die Klemmvorrichtung, um die Sattelstütze nicht zu beschädigen.

Die Klemmvorrichtung kann hierbei über Gelenke zweidimensional oder dreidimensional verschoben und fixiert werden, so dass jedes einspurige Elektrofahrrad in kürzester Zeit fixiert ist. Besonders vorteilhaft ist, wenn an Stelle der Sattelstütze ein Dorn in die Sattelaufnahme des Elektrofahrrads eingebracht wird. Hierdurch kann jede mögliche Beschädigung des Elektrofahrrads verhindert werden, da die erfindungsgemäße Vorrichtung (Prüfstand) in diesem Fall mit dem Fahrrad gar nicht in Berührung kommt, sondern die Klemmvorrichtung nur den Dorn umschließt.

Besonders vorteilhaft ist es, die Klemmvorrichtung beispielsweise mittels einer Gasdruckfeder vorspannbar auszubilden, um so eine Last auf die Sattelstütze aufbringen zu können und beispielsweise das Gewicht eines Fahrradfahrers, welches auf das Elektrofahrrad wirkt, zu simulieren.

## Patentansprüche

1. Vorrichtung (100) zur Prüfung von Elektrofahrrädern (200), welche durch pedalieren und/oder einen Elektromotor (216) antreibbar sind,
mit einem mittels eines Mitnehmer-Antriebs (113) antreibbaren Mitnehmer (110) zum Mitnehmen einer Pedalkurbel (205) oder eines Kettenblattes oder einer Zahnradscheibe eines zu prüfenden Elektrofahrrads zur Bereitstellung einer Drehbewegung der Pedalkurbel (205) bzw. des Kettenblattes bzw. der Zahnradscheibe, und einer Prüfeinrichtung (150)zur Prüfung des Einflusses der bereitgestellten Drehbewegung auf den Elektromotor (216) und/oder eine mit diesem zusammenwirkenden Batterie (218),
wobei der Mitnehmer-Antrieb (213) ausgebildet ist, um wahlweise eine gleichmäßige oder eine ungleichmäßige Drehbewegung der Pedalkurbel bzw. des Kettenblattes bzw. der Zahnradscheibe bereitzustellen,
**gekennzeichnet durch** eine Betätigungseinrichtung (162) zur Betätigung einer Gangschaltung eines zu prüfenden Elektrofahrrads.

2. Vorrichtung nach Anspruch 1, **dadurch gekennzeichnet, dass** der Mitnehmer zur Bereitstellung einer über eine vollständige Umdrehung der Pedalkurbel wenigstens teilweise dem menschlichen Pedalieren nachempfundenen veränderlichen Kraft ausgebildet ist.

3. Vorrichtung nach Anspruch 1 oder 2, **dadurch gekennzeichnet, dass** der Mitnehmer zur Bereitstellung einer über eine vollständige Umdrehung der Pedalkurbel wenigstens teilweise sinusförmig veränderlichen Kraft ausgebildet ist.

4. Vorrichtung nach Anspruch einem der vorstehenden Ansprüche, **gekennzeichnet durch** eine Fixiereinrichtung (20) zur räumlichen Fixierung des zu prüfenden Elektrofahrrads, wobei die Fixiereinrichtung (120) eine Spannvorrichtung (122) zum Einspannen wenigstens eines Rahmenteils des Elektrofahrrads aufweist.

5. Vorrichtung nach einem der vorstehenden Ansprüche, **dadurch gekennzeichnet, dass** der Mitnehmer (110) direkt an der Pedalkurbel (205) angreift.

6. Vorrichtung nach Anspruch 5, **dadurch gekennzeichnet, dass** der Mitnehmer die Pedalkurbel (105) einseitig, insbesondere an einer Halbkurbel (205a, 205b) der Pedalkurbel, angreift.

7. Vorrichtung nach Anspruch 1, dem Oberbegriff des Anspruchs 1, oder nach Ansprüchen 2-6, **dadurch gekennzeichnet, dass** der Mitnehmer (110) dreidimensional verfahrbar ausbildet ist und eine Mitnehmerscheibe (112) sowie wenigstens ein Mitnehmerelement (114) zum Mitnehmen der Pedalkurbel aufweist.

8. Vorrichtung nach Anspruch 6, **dadurch gekennzeichnet, dass** wenigstens ein Mitnehmerelement (114) des Mitnehmers (110) bezüglich der Mitnehmerscheibe (112) verschiebbar ausgebildet ist.

9. Vorrichtung nach einem der vorstehenden Ansprüche, **gekennzeichnet durch** wenigstens eine Antriebs und/oder Bremsvorrichtung (130), mittels der ein Rad des Elektrofahrrads direkt antreibbar oder abbremsbar ist.

10. Vorrichtung nach einem der vorstehenden Ansprüche, **dadurch gekennzeichnet, dass** die Prüfeinrichtung (150), insbesondere mittels einer Mess- und steuereinheit, zur Steuerung des Mitnehmers(110) und zur Messung sowie Auswertung hierbei erfasster Daten ausgebildet ist.

11. Vorrichtung nach einem der vorstehenden Ansprüche, **dadurch gekennzeichnet, dass** sie mobil, insbesondere mittels Rollen verfahrbar, ausgebildet ist.

12. Vorrichtung nach einem der vorstehenden Ansprüche, **dadurch gekennzeichnet, dass** sie modular ausgebildet ist.

13. Vorrichtung nach einem der vorstehenden Ansprüche, **dadurch gekennzeichnet, dass** die Betätigungseinrichtung (162) als direkt an einem Zug der Gangschaltung angreifender Schaltaktor ausgebildet ist.

## Claims

1. A device (100) for testing electric bicycles (200) which can be driven by pedalling and/or an electric motor (216),
having an actuator (110) which can be driven by means of an actuator drive (113) for actuating a pedal crank (205) or a chain ring or a toothed wheel disc of an electric bicycle to be tested in order to provide a rotary movement of the pedal crank (205) or the chain ring or the toothed wheel disc, respectively, and a testing device (150) for testing the influence of the rotary movement provided on the electric motor (216) and/or a battery (218) which interacts with the latter,
wherein the actuator drive (213) is adapted to selectively provide even or uneven rotation of the pedal crank or chain ring or toothed wheel disc, respectively,
**characterized by** an actuating device (162) for actuating a gear shift of an electric bicycle to be tested.

2. The device according to claim 1, **characterized in that** the actuator is designed to provide a variable force over a complete revolution of the pedal crank at least partially simulating human pedalling.

3. The device according to claim 1 or 2, **characterised in that** the actuator is designed to provide a force which is at least partially sinusoidally variable over a complete revolution of the pedal crank.

4. The device according to claim 1 of the previous claims, **characterized by** a fixing device (20) for spatially fixing the electric bicycle to be tested, the fixing device (120) comprising a clamping device (122) for clamping at least one frame part of the electric bicycle.

5. The device according to any one of the previous claims, **characterised in that** the actuator (110) engages directly with the pedal crank (205).

6. The device according to claim 5, **characterised in that** the actuator engages the pedal crank (105) on one side, in particular on a half crank (205a, 205b) of the pedal crank.

7. The device according to claim 1, the preamble term of claim 1, or according to claims 2-6, **characterized in that** the actuator (110) is designed to be movable in three dimensions and has an actuator plate (112) and at least one actuator element (114) for actuating the pedal crank.

8. The device according to claim 6, **characterised in that** at least one actuator element (114) of the actuator (110) is designed to be displaceable relative to the actuator plate (112).

9. The device according to any of the previous claims, **characterised by** at least one driving and/or braking device (130) by means of which a wheel of the electric bicycle can be directly driven or braked.

10. The device according to any one of the previous claims, **characterized in that** the testing device (150) is designed, in particular by means of a measuring and control unit, to control the actuator (110) and to measure and evaluate data acquired in this connection.

11. The device according to any one of the previous claims, **characterised in that** it is mobile, in particular movable by means of rollers.

12. The device according to any one of the previous claims, **characterised in that** it is modular.

13. The device according to any one of the prevous claims, **characterized in that** the actuating device (162) is designed as a shift actuator directly acting on a train of the gear shift.

## Revendications

1. Dispositif (100) pour tester les vélos électriques (200) qui peuvent être entraînés par le pédalage et/ou un moteur électrique (216),
comportant un conducteur (110) pouvant être entraîné au moyen d'un entraînement du conducteur (113) pour l'entraînement d'une manivelle de pédalier (205) ou d'un anneau de chaîne ou d'un disque de roue dentée d'une bicyclette électrique à tester pour produire un mouvement de rotation de la manivelle de pédalier (205) ou de l'anneau de chaîne ou du disque de roue dentée, et un dispositif de test (150) pour tester l'influence du mouvement de rotation prévu sur le moteur électrique (216) et/ou une batterie (218) qui interagit avec ce dernier,
dans lequel l'entraînement du conducteur (213) est adapté pour assurer sélectivement une rotation régulière ou irrégulière de la manivelle de la pédale, de l'anneau de chaîne ou du disquiet de roue dentée,
**caractérisé par** un dispositif d'actionnement (162) pour actionner un changement de vitesse d'un vélo électrique à tester.

2. Le dispositif selon la revendication 1, **caractérisé en ce que** le conducteur est conçu pour fournir une force variable sur un tour complet de la manivelle de la pédale, simulant au moins partiellement le pédalage humain.

3. Le dispositif selon la revendication 1 ou 2, **caractérisé en ce que** le conducteur est conçu pour fournir une force qui est au moins partiellement variable de façon sinusoïdale sur un tour complet de la manivelle de la pédale.

4. Le dispositif selon une des revendications précédentes, **caractérisé par** un dispositif de fixation (20) pour fixer spatialement la bicyclette électrique à tester, le dispositif de fixation (120) comprenant un dispositif de serrage (122) pour serrer au moins une partie du cadre de la bicyclette électrique.

5. Le dispositif selon l'une des revendications ci-dessus, **caractérisé en ce que** le conducteur (110) s'engage directement avec la manivelle de la pédale (205).

6. Le dispositif selon la revendication 5, **caractérisé en ce que** le conducteur engage la manivelle de pédale (105) d'un côté, en particulier sur une demi-manivelle (205a, 205b) de la manivelle de pédale.

7. Le dispositif selon la revendication 1, le terme générique de la revendication 1, ou selon les revendications 2 à 6, **caractérisé en ce que** le conducteur (110) est conçu pour être mobile dans trois dimensions et comporte une plaque de conducteur (112) et au moins un élément de conducteur (114) pour la conductement de la manivelle de pédale.

8. Le dispositif selon la revendication 6, **caractérisé en ce qu'**au moins un élément de conducteur (114) du conducteur (110) est conçu pour pouvoir être déplacé par rapport à la plaque de conducteur (112).

9. Le dispositif selon l'une des revendications ci-dessus, **caractérisé par** au moins un dispositif d'entraînement et/ou de freinage (130) au moyen duquel une roue de la bicyclette électrique peut être directement entraînée ou freinée.

10. Le dispositif selon l'une des revendications ci-dessus, **caractérisé en ce que** le dispositif de test (150) est conçu, en particulier au moyen d'une unité de mesure et de commande, pour contrôler le conducteur (110) et pour mesurer et évaluer les données acquises à cet égard.

11. Le dispositif selon l'une des revendications ci-dessus, **caractérisé en ce qu'**il est mobile, en particulier mobile au moyen de rouleaux.

12. Le dispositif selon l'une des revendications ci-dessus, **caractérisé en ce qu'**il est modulaire.

13. Le dispositif selon l'une des revendications ci-dessus, **caractérisé en ce que** le dispositif d'actionnement (162) est conçu comme un actionneur de changement de vitesse agissant directement sur un train du changement de vitesse.
